Europäisches Patentamt

European Patent Office

Office européen des brevets

(19)

(11) Veröffentlichungsnummer: **0 009 585**
**B1**

(12)

# EUROPÄISCHE PATENTSCHRIFT

(45) Veröffentlichungstag der Patentschrift: **07.04.82**

(21) Anmeldenummer: **79103009.1**

(22) Anmeldetag: **17.08.79**

(51) Int. Cl.³: **G 01 N 1/12, G 01 K 1/14, C 21 C 5/30**

(54) Transporteinrichtung für Sondenrohre zur Befestigung an Temperaturmess- bzw. Probenlanzen im metallurgischen Bereich.

(30) Priorität: **09.09.78 DE 2839255**

(43) Veröffentlichungstag der Anmeldung:
**16.04.80 Patentblatt 80/8**

(45) Bekanntmachung des Hinweises auf die Patenterteilung:
**07.04.82 Patentblatt 82/14**

(84) Benannte Vertragsstaaten:
**AT BE FR GB**

(56) Entgegenhaltungen:
**DE - A1 - 2 448 141**
**DE - A1 - 2 521 833**
**DE - A1 - 2 552 270**
**DE - A1 - 2 631 060**

(73) Patentinhaber: **Mannesmann Demag AG**
**Wolfgang-Reuter-Platz**
**D-4100 Duisburg (DE)**

(72) Erfinder: **Scherff, Helmut**
**Geldernsche Strasse 305a**
**D-4133 Neukirchen-Vluyn (DE)**

(74) Vertreter: **Flaig, Siegfried**
**Mannesmann AG Mannesmannufer 2**
**D-4000 Düsseldorf (DE)**

Courier Press, Leamington Spa, England.

**0 009 585**

Transporteinrichtung für Sondenrohre zur Befestigung an Temperaturmeß- bzw. Probenlanzen im metallurgischen Bereich

Die Erfindung betrifft eine Transporteinrichtung für Sondenrohre zur Befestigung an Temperaturmeß- bzw. Probenlanzen im metallurgischen Bereich, die aus einem Vorratsbehälter mittels einer Vorschubvorrichtung und mittels einer schwenkbaren Übergabevorrichtung inn die lotrechte Übergabestellung schwenkbar sind, wobei die Haltelanze mit der an ihr befestigten Sonde in den Ofenraum metallurgischer Gefäße ein- und ausfahrbar ist.

Derartige Transporteinrichtungen dienen der Automatisierung von Meßvorgängen unterschiedlichster Art bei der Stahlerzeugung in metallurgischen Öfen, z.B. in Stahlwerkskonvertern. Die Sondenrohre sind den hohen Temperaturen im metallurgischen Bereich entsprechend mit Meßköpfen oder Probenehmern für den einmaligen Gebrauch ausgestattet. Die solchermaßen gestalteten Sondenrohre weisen an einem Ende Verbindungsmittel auf, die mit zugehörigen Verbindungsmitteln an der lotrecht auf- und abbewegbaren haltelanze eine schnell herstellbare oder lösbare Verbindung ermöglichen. Mit dem Ende des Verbindungsmittels vorausgehend, wird die Sonde durch die Transporteinrichtung in Tätigkeit setzende Steuerimpulse von dem Steuerstand einer metallurgischen Schmelzanlage aus transportiert.

Bei einer solchen Transporteinrichtung ist es bakannt (DE—A1—26 31 060) in dem Vorratsbehälter vertikale Reihen von Sonden mit gleichgroßem Durchmesser anzuordnen. Die Transporteinrichtung weist einen besonderen Probekörper-Vereinzelungsmechanismus auf. Er besteht aus je einer Trägerarmeinheit für eine vertikale Sondenreihe, die vier Abschnitte von oberen und unteren Armen besitzt, die in Paaren zu zwei angeordnet sind. Trotz der aus den Armen bestehenden Greifvorrichtung müssen die Sondenrohre über schräge Gleitflächen auf die Ebene der Vorschubvorrichtung abgeworfen werden, was nachteilig ist. An der bekannten Transporteinrichtung ist ferner die Vorschubvorrichtung seitlich neben dem Vorratsbehälter angeordnet, wodurch ein größerer Platzbedarf entsteht. Ein solcher ist bei den im Hüttenwerk beengten Raumverhältnissen ebenfalls nachteilig. Neben der schwenkbaren Übergabevorrichtung bedarf die bekannte Transporteinrichtung außerdem noch eines besonderen Haltemechanismus' zum Übergeben der Sondenrohre von der Vorschubvorrichtung an die Haltelanze. Eine derartige Transporteinrichtung ist als Ganzes gesehen aufwendig und kompliziert.

Der Erfindung liegt die Aufgabe zugrunde, die bekannte Transporteinrichtung einfacher zu gestalten. Sodann hat sich der Erfinder zusätzlich die Aufgabe gestellt, eine Transporteinrichtung für Sondenrohre mit unterschiedlichen Querschnittsformen bzw. Querschnittsgrößen zu schaffen.

Die Erfindung löst die gestellte Aufgabe dadurch, daß die Vorschubvorrichtung unter dem Boden des Vorratsbehälters angeordnet ist, innerhalb dessen die Sondenrohre sich aufeinanderstützend mehrere voneinander unabhängige vertikale Reihen bilden, daß an den Stirnwänden des Vorratsbehälters jeder vertikalen Reihe eine vordere, dem größten Querschnitt des jeweiligen Sondenrohrs entsprechende und eine hintere Öffnung fur ein Schiebemittel zugeordnet sind und daß das Schiebemittel in der Sondenachse fluchtend an der Vorschubvorrichtung befestigt ist. Eine solche Transporteinrichtung besitzt die Vorteile eines einfacher gestalteten Sondenrohr-Entnahmemechanismus', der praktisch aus der Vorschubvorrichtung selbst besteht, wobei die Vorschubvorrichtung zudem raumsparend angeordnet ist. Eine weitere Vereinfachung der erfindungsgemäßen Transporteinrichtung ergibt sich durch den Wegfall eines besonderen Haltemechanismus'zum Übergeben der Sondenrohre von der Vorschubvorrichtung an die Haltelanze. Ein besonderer Vorteil der Erfindung besteht darin, daß in dem erfindungsgemäßen Vorratsbehälter Sondenrohre von unterschiedlichen Querschnittsgrößen bzw. Querschnittsformen eingeordnet werden können.

Der weiteren Erfindung liegt der Gedanke zugrunde, aus einer Vielzahl nebeneinander angeordneter vertikaler Sondenreihen ein Sondenrohr aus einer ausgewählten Vertikalreihe zu entnehmen. Demgemäß ist die Erfindung dahingehend weitergebildet, daß der Voratsbehälter oder die Vorschubvorrichtung senkrecht zur Vorschubrichtung der Vorschubvorrichtung horizontal bewegbar ist.

Eine beliebige Auswahl von Sondenrohren aus den vertikalen Reihen wird ferner dadurch ermöglicht, daß der Vorratsbehälter oder die Vorschubvorrichtung in lotrechter Richtung bewegbar ist.

Vorteilhaft ist ferner, daß dem untersten Sondenrohr einer vertikalen Reihe jeweils eine Ausgabeöffnung zugeordnet ist. Diese Lösung geht davon aus, unter dem Gewicht der in der vertikalen Reihe aufeinandergestützten Sondenrohre jeweils das unterste Sondenrohr abzuführen.

Es ist weiterhin vorgesehen, daß der horizontal bewegbare Vorratsbehälter in der jeweiligen Abziehstellung eines Sondenrohres verriegelbar ist.

Das Aufsuchen der gewählten vertikalen Sondenrohr-Reihe erfolgt nach einer weiteren Erfindungsmaßnahme derart, daß das Verriegelungsglied mittels eines Antriebs jeweils um den Abstand zwischen zwei vertikalen Sondenrohr-Reihen, den Vorratsbehälter ergreifend, horizontal hin- und herverschiebbar ist, wobei die Verriegelung mittels eines zusätzlichen Antriebs aufgehoben ist. Dieser Antrieb kann entweder an der Stirnseite am Vorratsbehälter oder unter dem Vorratsbehälter jeweils geschützt angeordnet sein.

Nach einer weiteren Verbesserung der Erfindung besteht die Vorschubvorrichtung aus einem Seilzug, der mittels eines doppelt beaufschlagbaren Kolben-Zylinder-Antriebs vor- und zurückbewegbar ist und daß an dem Seil ein in die Umrißfläche der Sondenrohre regender Mitnehmer befestigt ist, der in einer sich in Längsrichtung am Boden des Vorratsbehälters erstreckenden Führung bewegbar ist.

Die Mittel zum Umschalten von einer Vorschubbewegung auf eine Rückholbewegung bestehen nach der weiteren Erfindung darin, daß der Mitnehmer in der Stellung am Anfang der Vorschubbewegung in die Umrißfläche der Sondenrohre hineinragt und in der Stellung am Anfang der Rückholbewegung außerhalb der Umrißfläche der Sondenrohre befindlich ist.

Während des Transportierens sind die Sondenrohre den Umweltbedingungen des metallurgischen Betriebes ausgesetzt. Beschädigungen der Sondenrohre während des Transportierens können gemäß einer weiteren Erfindungsmaßnahme vermieden werden, indem die zum Vorratsbehälter gegenüberliegende Übergabevorrichtung aus einer mit einer nach oben weisenden Abdeckung versehenen, an den Stirnseiten mit Durchgangsöffnungen für die Sondenrohre versehene Aufnahme besteht, die zusammen mit der Abdeckung um eine horizontal und quer zur Sondenrohrachse verlaufende Achse schwenkbar ist.

Die Aufnahme für das Transportieren der Sondenrohre wird nach der weiteren Erfindung dadurch gebildet, daß an der Unterseite der nach oben weisenden Abdeckung mindestens ein Klemmbackenpaar für jeweils ein Sondenrohr vorgesehen ist.

Für eine Vorschubbewegung zum Übergeben des Sondenrohrs, das in der Aufnahme festgehalten ist, ist erfindungsgemäß weiterhin vorgesehen, daß die Klemmbackenpaare auf einem gemeinsamen Träger angeordnet sind, der in Richtung der Sondenrohr-Achse an der Abdeckung bewegbar gelagert ist.

Zum Schutz der Sondenrohre ist ferner vorgesehen, daß die das Sondenrohr zumindest auf drei Seiten umgebende, in horizontaler Lage nach oben weisende Abdeckung in senkrechter, geschwenkter Position einen Schutz gegen einen aufsteigenden Abgasstrom, dessen Strahlung und dergleichen bildet.

Nach der vorliegenden Erfindung übernimmt die Übergabevorrichtung die Funktionen Sondenrohrklemmen, Schwenken und Übergeben. Zum Übergeben ist vorgesehen, daß an der Aufnahme bzw. an der Abdeckung eine Führung vorgesehen ist, die in lotrechter Stellung eine Zentrierung für das jeweils in der Aufnahme befindliche Sondenrohr zur gegenüberliegenden Haltelanzenspitze bildet.

Die Mittel für das Abtransportieren verbrauchter Sondenrohre sind nach einer weiteren Ausgestaltung der Erfindung derart gestaltet, daß unterhalb der in lotrechter Stellung geschwenkten Aufnahme eine in der Verlängerung der Sondenachse angeordnete Rohrweiche vorgesehen ist. In der senkrechten Normallage der Rohrweiche fällt das verbrauchte Sondenrohr nach Lösen der Sondenrohrklemme durch die Rohrweiche in einen darunter bereitstehenden Sammelbehälter oder in das metallurgische Gefäß selbst, während eine gegebenenfalls vorher abgetrennte Probe bei ausgeschwenkter Rohrweiche zur Prüfstation geleitet werden kann.

Für das Abschneiden der verbrauchten Sondenrohr-Teile bzw. für Sondenrohrteile, die einer Überprüfung zu unterziehen sind, schlägt die Erfindung vor, daß eine an und für sich bekannte Trenneinrichtung für eine von dem Sondenrohr abzutrennende Analysenprobe oberhalb der schwenkbaren Rohrweiche angeordnet ist.

Ein Ausführungsbeispiel der Erfindung ist in der Zeichnung dargestellt und wird im folgenden näher beschrieben. Es zeigen

Fig. 1 eine teilweise geschnittene Seitenansicht der Transporteinrichtung,

Fig. 2 eine Vorderansicht des Vorratsbehälters in den Ebenen I—I gemäß Fig. 1,

Fig. 3 eine Einzelheit bei A in Fig. 1 im vergrößerten Maßstab, jedoch mit dem Mitnehmer der Vorschubvorrichtung außer Wirkstellung,

Fig. 4 die Einzelheit nach Fig. 3 mit dem Mitnehmer in Wirkstellung.

Die Transporteinrichtung weist folgende Hauptbaugruppen auf: Vorratsbehälter 1, Vorschubvorrichtung 2, Übergabevorrichtung 3. Die zu transportierenden Sondenrohre 4 sind ihrer Temperaturmeß- bzw. Proben-Funktion entsprechend an der Haltelanze 5 bzw. 5a zu befestigen. Im Bereich seitlich unterhalb der Haltelanze 5 befindet sich ein weiter nicht dargestellter Konverter oder dergleichen metallurgisches Gefäß.

Der Vorratsbehälter 1 enthält Reihen 6 von vertikal sich aufeinanderstützenden Sondenrohren 4, die von Reihe zue Reihe unterschiedliche Funktionen und Querschnitte aufweisen können.

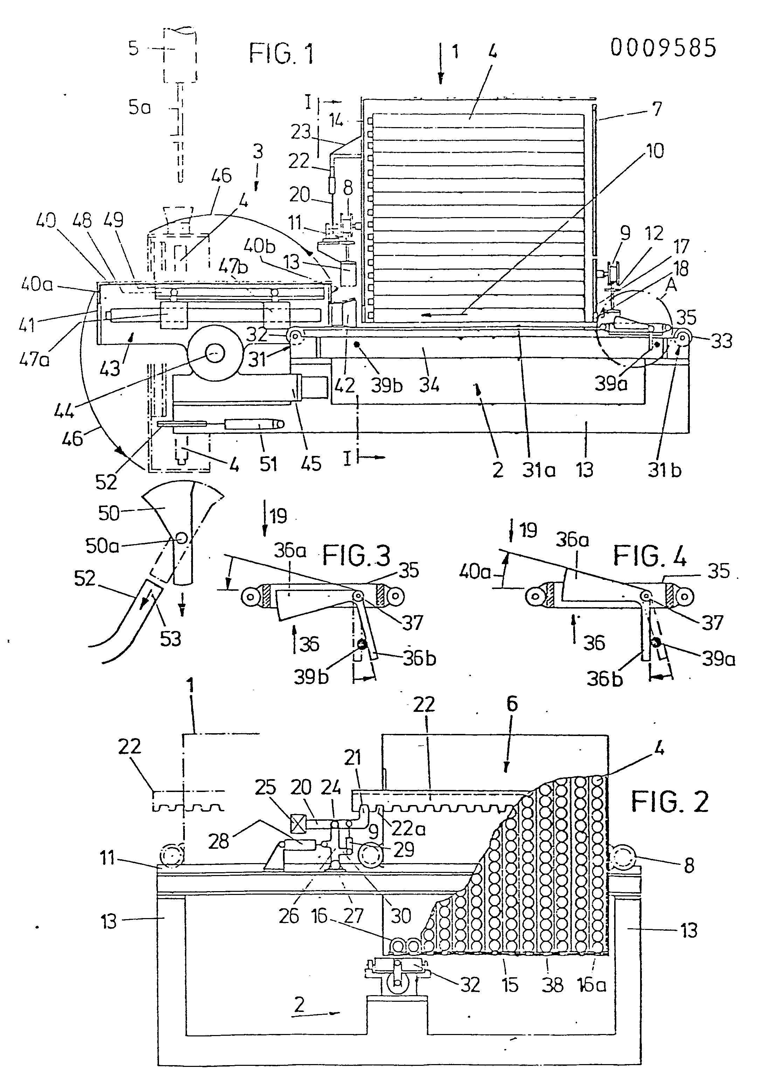

Die Sondenrohre 4 werden durch eine Tür 7 in den Vorratsbehälter gebracht. Bei nur einer einzigen Vorschubvorrichtung 2 ist der Vorratsbehälter 1 mittels an ihm befestigter Räderpaare 8 und 9 auf senkrecht zur Vorschubrichtung 10 verlaufenden Schienen 11 und 12 horizontal verschiebbar. Die Schienen stützen sich auf den Rahmen 13, der die gesamte Transportvorrichtung trägt. An der linken Stirnwand 14 sind an einer Reihe 6 von Sondenrohren 4 jeweils im Bereich des Bodens 15 Ausgabeöffnungen 16 angebracht und an der rechten Stirnwand 17 hintere Öffnungen 18 für das in den Figuren 3 und 4 größer dargestellte Schiebemittel 19. Dieses ist Teil der Vorschubvorrichtung 2. Die Hin- und Herbewegung des Vorratsbehälters 1 bewirkt eine Hebel 20, dessen Spitze als Zahn 21 ausgebildet ist und in die Zahnstange 22 eingreift, die selbst am Vorratsbehälter 1 mittels eines Vorsprungs 23 befestigt ist. Der Hebel 20 bildet in eingerasteter Stellung (wie in Fig. 2 gezeichnet) gleichzeitig ein Verriegelungsglied, um den Vorratsbehälter 1 im Augenblick des Vorschubs eines Sondenrohres 4 festzuhalten und eine unerwünschte Querbewegung zu vermeiden und um gleichzeitig am Sondenrohr einen zentrischen Angriff des Schiebemittels 190 zu gewährleisten. Der Hebel 20 ist um die Achse 24 schwenkbar, mit dem ausgleichsgewicht 25 versehen und an dem etwa senkrecht stehenden Zwischenglied 26 angelenkt. Letzteres ist um die horizontale Achse 27 schwenkbar, die ortsfest neben der Schiene 11 am Rahmen 13 befestigt ist. An dem Zwischenglied 26 ist ein erster Schwenkantrieb (z.B. Kolben-Zylinder-Antrieb) 28 angelenkt, der Schwenkbewegungen des Zwischengliedes 26 einleitet.

Dieser Schwenkantrieb ist ebenfalls am Rahmen 13 ortsfest angelenkt. Ein zweiter Schwenkantrieb 29 (Kolben-Zylinder-Antrieb), der am Hebel 20 und an einem Armn 30 des Zwischenglieds 26 angelenkt ist, schwenkt den Hebel 20 relativ zur Zahnstange 22, um einesteils zu verriegeln (Fig. 2) oder um durch Eingriff in die nächste Zahnlücke 22a den Vorratsbehälter 1 um einen Abstand zwischen zwei vertikalen Reihen 6 weiterzufahren. Der Abstand von Reihe 6 zu Reihe 6 entspricht demgemäß der Zahnteilung der Zahnstange 22. In der Strichpunktiert gezeichneten äußersten Stellung des Vorratsbehälters (Fig. 2) befindet sich die letzte Ausgabeöffnung 16a fluchtend mit der Vorschubvorrichtung 2.

Die Vorschubvorrichtung 2 weist einen Seilzug 31 auf, der über am Rahmen 13 befestigte Rollen 32 und 33 geführt ist. Am Obertrum 31a ist das Schiebemittel 19 befestigt. Die Enden des Seilzugs 31 sind am Untertrum 31b jeweils an dem Kolben eines doppelt beaufschlagbaren Kolben-Zylinder-Antriebs 34 befestigt, der in Vor- und Rückschubbewegung das Schiebemittel 19 bewegt. Letzteres besteht aus einem am Seilende des Seilzugs 31 befestigten Mitnehmerträger 35 (Figuren 3 und 4). Der Mitnehmer 36 ist im Mitnehmerträger 35 um das Zapfengelenk 37 schwenkbar und besteht aus einem Winkelhebel mit den Armen 36a und 36b. Der Mitnehmer 36 gleitet in einer Führung 38, die im Boden 15 des Vorratsbehälters 1 unter jeder Reihe 6 vertikal sich aufstützender Sondenrohre 4 vorgesehen ist.

Zum Vorschieben eines Sondenrohres 4 wird der Arm 36a durch Anstoßen des Armes 36b an den Anschlag 39a in die in Fig. 4 über den Mitnehmerträger 35 herausragende Stellung in Richtung des Pfeiles 40a geschwenkt. Gleichzeitig tritt der Arm 36a in die Führung 38 ein. Dieser Vorgang erfolgt im letzten Abschnitt der Rückschubbewegung. Im letzten Abschnitt der Vorschubbewegung stößt der Arm 36b gegen den Anschlag 39b und schwenkt den Arm 36a in den Mitnehmerträger 35 ein (Fig. 3). Während der Rückschubbewegung verbleibt der Arm 36a in der abgesenkten Lage. In dieser Lage findet auch kein Gleiten innerhalb der (schlitzförmigen) Führung 38 statt. Die höherliegenden Sondenrohre rutschen während der Vorschubbewegung allmählich nach.

Die Übergabevorrichtung weist eine Abdeckung 40 auf, die in horizontaler und in senkrechter Lage die unter ihr befindlichen Teile schützt. Die Abdeckung ist über die Stirnseiten 40a, 40b gezogen. An diesen befinden sich eine Durchgangsöffnung 41 und eine weitere, zum Trichter ausgebildete Öffnung 42, durch die das zu transportierende Sondenrohr 4 eingeschoben wird. Die Aufnahme 3 ist an der Abdeckung 40 befestigt und mittels der horizontalen Schwenkachse 44 in der lotrechten Ebene drehbar. Der Drehantrieb 45 befindet sich ebenfalls in geschützter Lage unterhalb der Abdeckung 40. Die lotrechte Stellung (strichpunktiert gezeichnet in Figur 1) wurde durch Schwenken der Übergabevorrichtung 3 in Pfeilrichtung 46 erreicht. An der Abdeckung 40 befindet sich ferner ein Klemmbackenpaar 47a, 47b.

Dieses ist auf dem gemeinsamen Träger 48 gelagert, der in einer zum Sondenrohr 4 parallelen Führung 49 verschiebbar ist. Besonders vorteilhaft ist, daß durch Schwenken der Übergabevorrichtung 3 die zum Trichter ausgebildete Öffnung 42 als Zentrierung für die Haltelanze 5 dient. Diese wird in den Trichter abgesenkt, wonach eine übliche Steckkupplung die Verbindung zwischen der Haltelanze 5 und dem Sondenrohr 4 herstellt.

Nach dem Meßvorgang in dem metallurgischen Gefäß, bei dem die Meßdaten über elektrische Leitungen innerhalb der Haltelanze 5 bzw. 5a in kurzer Zeit übermittelt werden und nachdem die Haltelanze 5 mit ihrem Teil 5a aus dem metallurgischen Gefäß herausgezogen worden ist, befindet sich das verbrannte Sondenrohr lediglich noch als Reststück an dem haltelanzen-Teil 5a. Beim Entkuppeln fällt dieses Reststück durch die Rohrweiche 50, die in der senkrecht gezeichneten Stellung steht, in einen Behälter oder in das metallurgische Gefäß selbst. Für den fall, daß eine Probe der im metallurgischen Gefäß befindlichen Schmelze genommen wurde, wird diese durch die Trenneinrichtung 51 mittels des Messers 52 abgetrennt und die Rohrweiche 50 in die strichpunktiert gezeichnete Stellung (Fig. 1) um die Achse 50a geschwenkt, so daß die Analysenprobe durch das Rohr 52, z.B. mittels Preßluft, in Pfeilrichtung 53 unmittelbar in das Laboratorium gelangt.

## Patentansprüche

1. Transporteinrichtung für Sondenrohre zur Befestigung an Temperaturmeß- bzw. Probenlanzen im metallurgischen Bereich, die aus einem Vorratsbehälter mittels einer Vorschubvorrichtung und mittels einer schwenkbaren Übergabevorrichtung in die lotrechte Übergabestellung schwenkbar sind, wobei die Haltelanze mit der an ihr befestigten Sonde in den Ofenraum metallurgischer Gefäße ein- und ausfahr-bar ist, dadurch gekennzeichnet, daß die Vorschubvorrichtung (2) unter dem Boden des Vorratsbehälters (1) angeordnet ist, innerhalb dessen die Sondenrohre (4) sich aufeinanderstützend mehrere voneinander unabhängige vertikale Reihen (6) bilden, daß an den Stirnwänden (14, 17) des Vorratsbehälters (1) jeder vetikalen Reihe (6) eine vordere, dem größten Querschnitt des jeweiligen Sondenrohrs (4) entsprechende und eine hintere Öffnung (18) für ein Schiebemittel (19) zugeordnet

4

sind und daß das Schiebemittel (19) in der Sondenachse fluchtend an der Vorschubvorrichtung (2) befestigt ist.

2. Transporteinrichtung nach Anspruch 1, dadurch gekennzeichnet, daß der Vorratsbehälter (1) oder die Vorschubvorrichtung (2) senkrecht zur Vorschubrichtung (10) der Vorschubvorrichtung (2) horizontal bewegbar ist.

3. Transporteinrichtung nach den Ansprüchen 1 und 2, dadurch gekennzeichnet, daß der Vorratsbehälter (1) oder die Vorschubvorrichtung (2) in lotrechter Richtung bewegbar ist.

4. Transporteinrichtung nach den Ansprüchen 1 bis 3, dadurch gekennzeichnet, daß dem untersten Sondenrohr (4) einer vertikalen Reihe (6) jeweils eine Ausgabeöffnung (16) zugeordnet ist.

5. Transporteinrichtung nach den Ansprüchen 1 bis 4, dadurch gekennzeichnet, daß der horizontal bewegbare Vorratsbehälter (1) in der jeweiligen Abziehstellung eines Sondenrohres (4) verriegelbar ist.

6. Transporteinrichtung nach den Ansprüchen 1 bis 5, dadurch gekennzeichnet, daß das Verriegelungsglied (20) mittels eines Antriebs (28) jeweils um den Abstand zwischen zwei vertikalen Sondenrohr-Reihen (6), den Vorratsbehälter (1) ergreifend, horizontal hin- und herverschiebbar ist, wobei die Verriegelung mittels eines zusätzlichen Antriebs (29) aufgehoben ist.

7. Transporteinrichtung nach den Ansprüchen 1 bis 6, dadurch gekennzeichnet, daß die Vorschubvorrichtung (2) aus einem Seilzug (31) besteht, der mittels eines doppelt beaufschlagbaren Kolben-Zylinder-Antriebs (34) vor- und zurückbewegbar ist und daß an dem Seil (31) ein in die Umrißfläche der Sondenrohre (4) ragender Mitnehmer (36) befestigt ist, der in einer sich in Längsrichtung am Boden (15) des Vorratsbehälters (1) erstreckende Führung (38) bewegbar ist.

8. Transporteinrichtung nach den Ansprüchen 1 bis 7, dadurch gekennzeichnet, daß der Mitnehmer (36) in der Stellung am Anfang der Vorschubbewegung in die Umrißfläche der Sondenrohre (4) hineinragt und in der Stellung am Anfang der Rückholbewegung außerhalb der Umrißfläche der Sondenrohre (4) befindlich ist.

9. Transporteinrichtung nach den Ansprüchen 1 bis 8, dadurch gekennzeichnet, daß die zum Vorratsbehälter (1) gegenüberliegende Übergabevorrichtung (3) aus einer mit einer nach oben weisenden Abdeckung (40) versehenen, an den Stirnseiten mit Durchgangsöffnungen (41, 42) für die Sondenrohre (4) versehene Aufnahme (43) besteht, die zusammen mit der Abdeckung (40) um eine horizontal und quer zur Sondenrohr-Achse (4) verlaufende Achse (44) schwenkbar ist.

10. Transporteinrichtung nach den Ansprüchen 1 bis 9, dadurch gekennzeichnet, daß an der Unterseite der nach oben weisenden Abdeckung (40) mindestens ein Klemmbackenpaar (47a, 47b) für jeweils ein Sondenrohr (4) vorgesehen ist.

11. Transporteinrichtung nach den Ansprüchen 1 bis 10, dadurch gekennzeichnet, daß das Klemmbackenpaar (47a, 47b) auf einem gemeinsamen Träger (48) angeordnet sind, der in Richtung der Sondenrohr-Achse (4) an der Abdeckung (40) bewegbar gelagert ist.

12. Transporteinrichtung nach den Ansprüchen 1 bis 11, dadurch gekennzeichnet, daß di das Sondenrohr (4) zumindest auf drei Seiten umgebende, in horizontaler Lage nach oben weisende Abdeckung (40) in senkrechter, geschwenkter Postion einen Schutz gegen einen aufsteigenden Abgasstrom, dessen Strahlung und dgl. bildet.

13. Transporteinrichtung nach den Ansprüchen 1 bis 12, dadurch gekennzeichnet, daß an der Aufnahme (43) bzw. an der Abdeckung (40) eine Führung (49) vorgesehen ist, die in lotrechter Stellung (Fig. 1) eine Zentrierung für das jeweils in der Aufnahme (43) befindliche Sondenrohr (4) zur gegenüberliegenden Halteanzenspitze (5) bildet.

14. Transporteinrichtung nach den Ansprüchen 1 bis 13, dadurch gekennzeichnet, daß unterhalb der in lotrechte Stellung geschwenkten Aufnahme (43) ein in der Verlängerung der Sondenachse angeordnete Rohrweiche (50) vorgesehen ist.

15. Transporteinrichtung nach den Ansprüchen 1 bis 14, dadurch gekennzeichnet, daß eine an und für sich bekannte Trenneinrichtung (51) für eine von dem Sondenrohr (4) abzutrennende Analysenprobe oberhalb der schwenkbaren Rohrweiche (50) angeordnet ist.

**Revendications**

1. Système de manutention des fourreaux de protection destinés à être fixés aux lances de mesure de température et de prise d'éprouvettes dans les domaine métallurgique, et qui sont pivotables, à partir d'un conteneur de stockage, au moyen d'un dispositif pousseur et d'un dispositif de remise orientable, en position perpendiculaire de remise, la lance avec la sonde y fixée pouvant, en l'occurrence, être introduite à l'intérieure et retirée de cuves métallurgiques, caractérisé par le fait que: le pousseur (2) est installé sous le fond du conteneur (1), à l'intérieur duquel les fourreaux de protection (4) s'appuyant les uns sur les autres, forment plusieurs rangées verticales (6) indépendantes les unes des autres, que, dans les parois frontales (14, 17) du conteneur (1), un orifice avant correspondant à la plus grande section du fourreau (4) respectif et un orifice accière (18) destinés à un entraineur (19), sont affectés à chaque rangée verticale (6), que l'entraîneur (19), aligné sur l'axe de la sonde, est fixé sur le pousseur (2).

2. Système de manutention selon revendication 1: caractérisé par le fait que: le conteneur (1) ou

**0 009 585**

le pousseur (2) est déplaçable à l'horizontale et ce, verticalement par rapport au sens du mouvement (10) du pousseur (2).

3. Système de manutention selon revendications 1 et 2 caractérisé par le fait que: le conteneur (1) ou le pousseur (2) est déplaçable dans le sens vertical.

4. Système de manutention selon revendications 1 à 3, caractérisé par le fait que: un orifice de sortie (16) est affecté au fourreau de protection (4) le plus bas de chacune des reangées verticales (6).

5. Système de manutention selon revendications 1 à 4, caractérisé par le fait que: le conteneur (1) à déplacement horizontal peut être bloqué en chaque position de retrait d'un fourreau protection (4).

6. Système de manutention selon revendications 1 à 5, caractérisé par le fait que: l'élément de blocage (20) saisissant le conteneur (1) peut faire un mouvement de va-et-vient horizontal grâce à un entraînement (28), son mouvement respectif étant égal à l'intervalle entre deux rangées verticales de fourreaux de protection (6), le dispositif étant débloqué au moyen d'un entraînement supplémentaire (29).

7. Système de manutention selon revendications 1 à 6, caractérisé par le fait que: le pousseur (2) se compose d'une traction à câbles (31) faisant un mouvement de va-et-vient grâce à un entraînement par vérin et pistons (34), à double admission, qu'un entraîneur (36) en saillie sur la périphérie du fourreau de protection (4) est fixé à ce câble; l'entraîneur peut se déplacer dans un guidage (38) qui se trouve en position longitudinale au fond (15) du conteneur (1).

8. Système de manutention selon revendications 1 à 7, caractérisé par le fait que: lors du démarrage du mouvement d'avance, l'entraîneur (36) se trouve en saillie sur la périphérie des fourreaux de protection (4) et, au démarrage du mouvement de rappel, à l'extérieur de la périphérie des fourreaux (4).

9. Système de manutention selon revendications 1 à 8, caractérisé par le fait que: le dispositif de remise (3) en face du conteneur (1) est pourvu d'une reprise (43) dotée d'un recouvrement (40) sur le haut et, sur les faces avant, d'ouvertures de passage (41, 42) pour les fourreaux de protection (4), cette reprise étant, avec le recouvrement (40), orientables sur un plan (44) horizontal et transversal par rapport à l'axe des fourreaux de protection (4).

10. Système de manutention selon les revendications 1 à 9, caractérisé par le fait que: une paire de pinces de serrage (47a, 47b) doit, au moins, être prévue sur le côté inférieur du recouvrement (40).

11. Système de manutention selon les revendications 1 à 10, caractérisé par le fait que: la paire de pinces de serrage (47a, 47b) est installée sur un support commun (48) qui est logé, de manière mobile, en direction de l'axe des fourreaux de protection (4) sur le recouvrement (40).

12. Système de manutention selon revendications 1 à 11, caractérisé par le fait que: le recouvrement (40) entourant le fourreau de protection (4) sur trois côtés au moins, forme bien, en position pivotée et verticale, une protection contre le courant de gaz ascendants, leur rayonnement et autres.

13. Système de manutention selon revendications 1 à 12, caractérisé par le fait que: la reprise (43) ou le recouvrement (40) est doté d'un guidage (49) qui, en position verticale (fig. 1) permet le centrage du fourreau de protection (4) se trouvant respectivement en position de reprise (43) et ce, par rapport à la pointe de la lance (5) placée en face.

14. Système de manutention selon revendications 1 à 13, caractérisé par le fait que: une aiguille (50) est prévue sous la reprise (43) pivotée en position verticale et ce, dans le prolongement de l'axe de la sonde.

15. Système de manutention selon revendications 1 à 14, caractérisé par le fait que: un dispositif de tronçonnage (51), normalement connu, est prévu au-dessus de l'aiguille orientable afin de détacher l'éprouvette destinée à l'analyse du fourreau de protection (4).

**Claims**

1. Transport means for cartridges to be fixed to temperature measuring or sampling lances in metallurgical operations, the cartridges being removed from a magazine by means of a feeder and being swung into vertical transfer position by means of a swing type transfer device, and the lance with the cartridge fixed to it being capable of moving into and out of the furnace chamber of metallurgical vessels, characterized by the feeder (2) being arranged beneath the bottom of the magazine (1) within which the cartridges (4) form several independent, vertical rows (6) on top of each other, and by the end walls (14, 17) of the magazine (1) having a front opening for each vertical row (6) to suit the maximum cross section of the respective cartridge (4) as well as a rear opening (18) for a pusher (19), and by the pusher (19) being fixed to the feeder (2) in line with the cartridge axis.

2. Transport means according to claim 1 characterized by the magazine (1) or the feeder (2) being horizontally movable perpendicularly to the feeding direction (10) of the feeder (2).

3. Transport means according to claims 1 and 2 characterized by the magazine (1) or the feeder (2) being movable in vertical direction.

4. Transport means according to claims 1 to 3 characterized by the bottom-most cartridge (4) of a vertical row (6) being given a specific discharge opening (16).

6

5. Transport means according to claims 1 to 4 characterized by the horizontally movable magazine (1) being lockable in the respective discharge position of a cartridge (4).

6. Transport means according to claims 1 to 5 characterized by the locking elements (20) being horizontally movable to and fro by means of an actuator (28) each time over a distance covering two vertical cartridge rows (6) at the same time engaging the magazine (1), and by the locking action being released with the help of an additional actuator (29).

7. Transport means according to claims 1 to 6 characterized by the feeder (2) consisting of a rope hoist (31) which can be moved forward and backward by means of a double-acting piston cylinder actuator (34), and by a dog (36) protruding into the profile of the cartridge (4) being fixed to the rope (31), the dog being movable in guide arrangement (38) extending in longitudinal direction on the bottom (15) of the magazine (1).

8. Transport means according to claims 1 to 7 characterized by the dog (36) protruding into the profile of the cartridge (4) at the commencement of the feeding motion and disengaging the profile of the cartridge (4) at the commencement of the return motion.

9. Transport means according to claims 1 to 8 characterized by the transfer device (3) located opposite to the magazine (1) having a cover (40) pointing upward and a holder (43) with openings (41, 42) at the ends for receiving the cartridges (4), which holder together with the cover (40) can be swung about a horizontal axis (44) transverse to the cartridge axis (4).

10. Transport means according to claims 1 to 9 characterized by at least one pair of clamping jaws (47a, 47b) for one cartridge (4) being provided on the underside of the upward-pointing cover (40).

11. Transport means according to claims 1 to 10 characterized by a pair of clamping jaws (47a, 47b) being arranged on a common carrier (48) and the carrier being movably supported on the cover (40) in the direction of the cartridge axis (4).

12. Transport means according to claims 1 to 11 characterized by the cover (40) pointing upward in horizontal position and enveloping the cartridge (4) on not less than three sides providing a protection against an ascending stream of waste gas, its radiation etc. when swung into vertical position.

13. Transport means according to claims 1 to 12 characterized by a guide (49) being provided on the holder (43) and/or cover (40) which, in perpendicular position (Fig. 1), forms a centering for the cartridge (4) in the holder (43) relative to the lance point (5).

14. Transport means according to claims 1 to 13 characterized by a cartridge divertor (50) being provided beneath the holder (43) swung into perpendicular position in line with the cartridge axis.

15. Transport means according to claims 1 to 14 characterized by a previously known cut off (51) being arranged above the swing type cartridge divertor (50) to cut an analysis specimen off the cartridge (4).

7

FIG. 1

0 009 585

0009585

FIG. 3

FIG. 4

FIG. 2